Europäisches Patentamt

European Patent Office

Office européen des brevets

(11) Publication number: **0 484 729 A1**

# EUROPEAN PATENT APPLICATION

(21) Application number: **91117974.5**

(22) Date of filing: **22.10.91**

(51) Int. Cl.5: **C01D 3/16**

(30) Priority: **07.11.90 JP 301317/90**

(43) Date of publication of application:
**13.05.92 Bulletin 92/20**

(84) Designated Contracting States:
**AT DE ES FR GB IT**

(71) Applicant: **Nasu, Atsushi**
**99 Katako**
**Youkaichiba-shi Chiba-ken(JP)**

(72) Inventor: **Nasu, Atsushi**
**99 Katako**
**Youkaichiba-shi Chiba-ken(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) Method for separating salt from naturally occuring salt.

(57) Disclosed herein is a method for separating salt from naturally occurring salt (rock salt or solar salt) which comprises a first separating step of dissolving naturally occurring salt in water, adding to the aqueous solution a strong acid containing sulfate ions, thereby adjusting it to low pH, adding to the aqueous solution an alkaline agent, thereby adjusting it to high pH and forming precipitates, separating the precipitates from the remaining aqueous solution, and a second separating step of concentrating the remaining aqueous solution, cooling the concentrate, thereby forming precipitates, and separating the precipitates form the aqueous solution.

EP 0 484 729 A1

BACKGROUND OF THE INVENTION

1. Field of the Invention:

The present invention relates to a method for effectively utilizing a variety of elements contained in naturally occurring salt such as rock salt, solar salt and salt of lake. More particularly, it is concerned with a method for separating naturally occurring salt into several fractions which differ in composition according to their individual applications.

2. Description of the Prior Art:

Rock salt is a crystalline solid of sodium chloride (NaCl) which occurs in nature. It consists mostly of NaCl (about 99%); but it also contains other elements such as magnesium (Mg), calcium (Ca), and silicon (Si) and some impurities. By contrast, solar salt is obtained by evaporating seawater. It contains more impurities than rock salt. After purification, it is used in the food industry as well as in the chemical industry to make chlorine and sodium. In Japan, solar salt is predominant.

The present inventors have been studying the use of salt contained in seawater. As the result, they devised a simple method for isolating desired components from seawater by precipitation. They also proposed a fuel modifier and ionized water for food production, which employ the salt thus isolated from seawater. (See Japanese Patent Laid-open No. 221107/1990 and Japanese Patent Application Nos. 84534/1989 and 113246/1989.)

The business that uses seawater as a raw material is difficult to carry on in inland areas where seawater is not readily available.

SUMMARY OF THE INVENTION

It is an object of the present invention to provide a method for separating not only salt (NaCl) but also other effective components from naturally occurring salt such as rock salt and solar salt which are easy to transport.

The gist of the present invention resides in a method for separating salt from naturally occurring salt which comprises a first separating step of dissolving naturally occurring salt in water, adding to the aqueous solution a strong acid containing sulfate ions, thereby adjusting it to low pH, adding to the aqueous solution an alkaline agent, thereby adjusting it to high pH and forming precipitates, and separating the precipitates from the remaining aqueous solution, and a second separating step of concentrating the remaining aqueous solution, cooling the concentrate, thereby forming precipitates, and separating the precipitates form the aqueous solution.

DETAILED DESCRIPTION OF THE INVENTION

The method of the present invention uses rock salt or solar salt as such as a raw material. According to the method, rock salt or solar salt is dissolved in water to make an aqueous solution (brine) with a concentration of several wt%. Insoluble matters such as sand should be removed from the brine. The water for dissolution is not limited to fresh water, but it may be seawater.

In the first separating step, a strong acid containing sulfate ions is added to the brine. This strong acid may be dilute sulfuric acid (several %). Alternatively, it may be an aqueous solution obtained by dissolving activated calcium phosphate in water, adding to the aqueous solution conc. sulfuric acid (in an amount of 3-5% of the aqueous solution), thereby forming precipitates, and removing the precipitates. (The thus obtained aqueous solution is referred to as P-S acid hereinafter.) The P-S acid is a strong acid with pH 0.2, but it is safer and easier to handle than sulfuric acid. Dilute sulfuric acid or P-S acid is added to the brine in an amount of several % of the brine. After standing for 2-3 hours, the brine is adjusted to low pH (lower than pH 2). This acidifying step gives rise to very few precipitates, which may be removed by filtration. This strong acid may be replaced by a semisolid strong acid (referred to as D-S acid hereinafter) which is obtained by mixing the precipitates that occur first in the separating step with a calcium compound, firing the mixture, and mixing the fired product with sulfuric acid. This D-S acid was proposed by the present inventors in Japanese Patent Application No. 232859/1990. Compared with sulfuric acid, it is milder and easier to handle like P-S acid, and it is also easier to transport because it is semisolid. Therefore, it is suitable for use in the method of the present invention.

Subsequently, a strong alkaline agent is added to the brine which has been adjusted to low pH. It is to neutralize the acidified brine and adjust it to high pH, thereby precipitating sulfates of alkaline earth metals and other metals, which are only slightly soluble in a solution of high pH. Examples of the strong alkaline agent include sodium hydroxide (as such) and an aqueous solution of calcium oxide incorporated with sodium hydroxide (referred to as Ca-Na aqueous solution).

The strong alkaline agent should be used in an amount sufficient to achieve the above-mentioned object. The amount of sodium hydroxide (solid) should be 3 wt% of the brine. The amount of Ca-Na aqueous solution should be 5 wt% of the brine. The brine is allowed to stand for more than 10 hours until the brine becomes basic (pH 13 or above) and gives rise to a small amount of precipitate (a). This precipitate (a) is subsequently dried and fired at a high temperature to give a ceramic-like composition. This ceramic-like composition finds use as an air filter for automobiles and a water treatment or deodorizer. The usage of the ceramic-like composition was proposed by the present inventors in Japanese Patent Application Nos. 297981/1989, 299086/1989, and 306822/1989.

In the second separating step, the brine remaining after the separation of the precipitate (a) is concentrated to some extent by heating and water evaporation. The concentrate is cooled to cause precipitate (b) to separate out. This precipitate (b) is separated from the liquid (c) by filtration. The concentration should be carried out to such an extent that the volume of the brine is reduced to less than 20%, preferably 10-15%, of the original volume. The thus obtained liquid (c) is a strongly basic aqueous solution of pH 14. On evaporation, this liquid (c) gives rise to a white sandy solid (d).

The precipitate (b) consists mainly of NaCl; but it contains more silicon (Si) than rock salt or solar salt as a raw material. Therefore, it may be used as a silicon-containing salt. For example, an aqueous solution of this salt finds use as a food additive which utilizes the antibacterial action of Si ions. It also finds use as ionized water which contributes to food taste and preservation.

The solid (d) contains more cations (not only Na but also Si and Al) and less Cl ions than rock salt or solar salt as a raw material. The aqueous solution (c) of this solid (d) is extremely basic; therefore, it finds use as a washing solution and neutralizing agent in substitution for an aqueous solution of sodium hydroxide. It may also be used to treat bilge (a mixture of oil and seawater which collects around a marine engine) for oil-water separation. It is effective in the treatment of acid waste liquids discharged from paper mills. It is useful as a solvent for epoxy paints and acrylic paints which used to be dissolved in toluene or lacquer thinner.

EXAMPLES

The invention will be described in more detail with reference to the following examples.

1. Preparation of D-S acid

First, P-S acid (pH 0.2) was prepared by mixing an aqueous solution of calcium phosphate with as much conc. sulfuric acid as 5% of the aqueous solution. This P-S acid was added to seawater to lower the pH of the seawater. To the acidified seawater was added as much sodium hydroxide as 3% of the seawater. The seawater was allowed to stand for 24 hours until precipitation took place. The precipitates were filtered off and dried. The precipitates were mixed with a calcium compound (whose major constituent is calcium phosphate formed by firing animal bones) in a 1:1 mixing ratio. The mixture was fired at a temperature higher than 1,000°C. The fired product (1 g) was mixed with sulfuric acid (5 g) to give D-S acid.

2. Preparation of brine

In 1 ton of fresh water was dissolved 50 kg (5%) of rock salt (in Example 1) or solar salt (in Example 2) with stirring, followed by filtration for removal of insoluble matters.

3

3. Separation of brine

Example 1

To the brine of rock salt was added 1.5 kg of D-S acid, followed by standing for 24 hours. The brine was acidified to pH 1.7. To the acidified brine was added 30 kg of sodium hydroxide, followed by standing for 10 hours. The pH of the brine rose to 13.5. The brine was filtered to separate precipitate (a). The precipitate (a) was dried in the sun. Thus there was obtained about 2,475 kg of solid (a). (The first separating step.)

The brine remaining after the first separating step was dehydrated by evaporation to give about 160 liters of concentrated solution. This concentrated solution was rapidly cooled to effect precipitation. After filtration, there was obtained 48.955 kg of precipitate (b) which is a flowable crystalline salt. The remaining solution (d) was further heated for dehydration to give a solid (d) in an amount of 27.595 kg.

Example 2

The brine of solar salt was treated in the same manner as in Example 1. Thus there were obtained 1.67 kg of precipitate (a), 42.27 kg of precipitate (b), and 28.64 kg of solid (d).

Tables 1 and 2 show the results of elemental analyses of precipitate (b) and solid (d) in Examples 1 and 2, respectively. (Quantities of Na and Cl are expressed in terms of wt%, and quantities of other elements are expressed in terms of mg/l.)

Table 1

| Element | Rock salt | (b) | (d) |
|---------|-----------|------|------|
| Si | <5 | 541 | 2340 |
| Al | <5 | 147 | 653 |
| Fe | <5 | 51.6 | 82.5 |
| Ca | 1100 | 735 | 335 |
| Na | 38.0 | 40.5 | 46.6 |
| K | 65.1 | 122 | 348 |
| Mg | 6.4 | 37.5 | 93.0 |
| Cl | 60.4 | 48.7 | 20.7 |
| Ti | <0.5 | 20.9 | 98.5 |
| P | 356 | 444 | 332 |

Table 2

| Element | Solar salt | (b) | (d) |
|---|---|---|---|
| Si | <5 | 681 | 2180 |
| Al | <5 | 213 | 653 |
| Fe | <5 | 49.0 | 39.3 |
| Ca | 592 | 369 | 52.4 |
| Na | 37.6 | 39.2 | 43.6 |
| K | 201 | 128 | 607 |
| Mg | 169 | 53.0 | 56.8 |
| Cl | 60.0 | 56.7 | 30.2 |
| Ti | <0.5 | 39.7 | 73.3 |
| P | 216 | 306 | 253 |

Application Example 1

The solid (d) separated by the method of the present invention was made into a fuel modifier (as disclosed in Japanese Patent Application No. 84533/1989) by dissolving in an organic solvent miscible with gasoline or any other fuels. This fuel modifier can be added directly to a fuel (e.g., gasoline and gas oil) to improve its combustion, fuel cost, and calorie and to minimize the emission of toxic gas due to incomplete combustion. Application Example 2

Five grams of the precipitate (b) was dissolved in 1 liter of water to give ionized water for food production. The ionized water was used to make noodle by mixing with flour. The noodle tasted good and kept good for 2 weeks at about 8°C.

[Effect of the invention]

As mentioned above, the method of the present invention permits one to separate naturally occurring salt into effective components in the form of composition suitable for specific uses simply by gradually changing the pH of the aqueous solution containing naturally occurring salt. Moreover, the method does not present difficulties in transporting seawater because it employs solid salt as a raw material.

**Claims**

1. A method for separating salt from naturally occurring salt which comprises a first separating step of dissolving naturally occurring salt in water, adding to the aqueous solution a strong acid containing sulfate ions, thereby adjusting it to low pH, adding to the aqueous solution an alkaline agent, thereby adjusting it to high pH and forming precipitates, separating the precipitates from the remaining aqueous solution, and a second separating step of concentrating the remaining aqueous solution, cooling the concentrate, thereby forming precipitates, and separating the precipitates form the aqueous solution.

2. A method for separating salt from naturally occurring salt as claimed in Claim 1, wherein said strong acid is one which is obtained by dissolving activated calcium phosphate in water, adding to the aqueous solution sulfuric acid, thereby forming precipitates, and removing the precipitates.

3. A method for separating salt from naturally occurring salt, wherein the naturally occurring salt is rock salt.

4. A method for separating salt from naturally occurring salt, wherein the naturally occurring salt is solar salt.

5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 956 157 (NASU, ATSUSHI) <br> * the whole document * <br> --- | 1,2,4 | C01D3/16 |
| D,X | EP-A-0 391 318 (NASU, ATSUSHI) <br> * page 3, line 14 - page 4, line 18 * <br> * page 6, line 21 - line 50 * <br> * claims 1-3,6-8 * <br><br> ----- | 1,2,4 | |
| | | | **TECHNICAL FIELDS SEARCHED (Int. Cl.5)** |
| | | | C01D |

The present search report has been drawn up for all claims

| Place of search | Date of completion of the search | Examiner |
|---|---|---|
| THE HAGUE | 10 FEBRUARY 1992 | VAN DER POEL W. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document